# EUROPÄISCHE PATENTSCHRIFT

(11) **EP 1 598 554 B1**
(45) Veröffentlichungstag und Bekanntmachung des Hinweises auf die Patenterteilung: **13.02.2008**
(21) Anmeldenummer: 05008962.2
(22) Anmeldetag: 23.04.2005
(51) Int. Cl.: F04B 37/14, F04B 49/06, F04B 17/03, F04B 35/04, F04B 7/04, H02K 29/08

(54) **Trocken laufende Kolbenvakuumpumpe**
Dry running piston type vacuum pump
Pompe à vide à pistons sans lubrifiant

(30) Priorität: 18.05.2004 DE 102004024562
(43) Veröffentlichungstag der Anmeldung: 23.11.2005
(73) Patentinhaber: Pfeiffer Vacuum GmbH, 35614 Asslar (DE)
(72) Erfinder: Conrad, Armin, 35745 Herborn (DE); Losch, Wolfgang, 35080 Bad Endbach (DE)

(56) Entgegenhaltungen:
- WO-A-01/28076
- WO-A-98/48170
- WO-A-03/085268
- US-A- 4 588 912
- US-A- 4 998 865
- US-A1- 2002 172 599

## Beschreibung

Die Erfindung betrifft eine trocken laufende Kolbenvakuumpumpe nach dem Oberbegriff des ersten Anspruchs.

Trocken laufende Kolbenvakuumpumpen wie zum Beispiel in US-PS 5,921,755 offenbart, haben in den letzten Jahren erheblich an kommerzieller Bedeutung gewonnen. Sie dienen zur Erzeugung von Grob- und Feinvakuum in Anwendungen, in denen eine Kontamination des Rezipienten mit Ölrückständen selbst in geringen Mengen nicht toleriert werden kann.

Die Güte des erreichbaren Vakuums hängt ab von den Spalten, bzw. Dichtmitteln zwischen Kolben und Zylinderwand. Weiterhin hängt sie in starkem Maße von der Größe der schädlichen Volumina ab. Damit ist beispielsweise das Volumen gemeint, das im Schöpfraum verbleibt, wenn der Kolben den oberen Umkehrpunkt seiner Bewegung und damit den Punkt des Ausstoßens erreicht hat. Gebildet werden solche Räume beispielsweise durch die Ausgestaltung der Ventile.

Nach dem Ausstoßen des Gases folgt der Ansaugvorgang, in dem sich der Kolben vom oberen Umkehrpunkt weg bewegt und den Schöpfraum vergrößert. In diesem Raum herrscht ein starker Unterdruck. Während des Beginns des Abpumpvorgangs bewegt sich der Kolben aber gegen Atmosphärendruck, d.h. über Kolbenboden und Kolbendeckel fällt ein Druck von nahezu einem Bar ab.

Dies erfordert ein ausreichendes Drehmoment auf Seiten des Antriebsmotors, damit der Kolben überhaupt in Bewegung versetzt werden kann.

Oftmals sind gattungsgemäße Kolbenvakuumpumpen so ausgestaltet, dass der Raum mit dem Kurbeltrieb im Laufe des Abpumpens mit evakuiert wird. Im weiteren Verlauf des Abpumpens sinkt daher diese Druckdifferenz und damit auch die Anforderung an das benötigte Drehmoment des Antriebsmotors. Das bereitgestellte Drehmoment geht einher mit der Leistungsaufnahme des Motors.

Im Stand der Technik werden mit asynchronen Wechselstrom-Elektromotoren betrieben.

Diese weisen bei niedrigen Drehzahlen ein geringes Drehmoment auf, der Motor muss also sehr groß ausgelegt werden, viel leistungsstärker als im Dauerbetrieb erforderlich. Dies führt insgesamt zu hohen Betriebskosten, da unnötig viel Energie beansprucht wird.

Weiterhin sorgt die Überdimensionierung für einen unnötig voluminösen Aufbau. Im Gegensatz dazu ist man heute bestrebt, Pumpen möglichst kompakt zu bauen, um sie in Pumpstände und Anlagen integrieren zu können.

Negativ wirkt sich die Größe des Motors auch auf die Vibrationsentwicklung der Pumpe aus, was in modernen Pumpständen und Anlagen mit zum Teil empfindlichen Messgeräten immer weniger tolerierbar ist.

In vielen Anwendungen ist es wünschenswert, das Saugvermögen der Pumpe regulieren zu können. Hierzu wird eine zusätzliche Regelelektronik benötigt, was zusätzliche Herstellungskosten bedeutet.

Die US-PS 4,998,865 betrifft eine Kraftstoffpumpe mit einem bürstenlosen Gleichstrommotor, wobei Pumpsystem, Motor und Steuerelektronik in einem gemeinsamen Gehäuse angeordnet sind.

Der Erfindung liegt daher die Aufgabe zu Grunde, eine trocken laufende Kolbenvakuumpumpe zu bauen, die die Nachteile des Standes der Technik überwindet.

Diese Aufgabe wird gelöst durch die kennzeichnenden Merkmale des ersten Anspruchs. Die abhängigen Ansprüche 2 bis 6 stellen weitere vorteilhafte Ausführungen dar.

Die erfindungsgemäße Kolbenvakuumpumpe weist einen bürstenlosen Gleichstrommotor als Antrieb auf. Dieser besteht aus Permanentmagneten, die auf der Antriebswelle fixiert sind und ortsfesten elektrischen Spulen, die ein magnetisches Drehfeld erzeugen. Die Ansteuerung und Bestromung der Spulen erfolgt durch eine Regelelektronik.

Der Vorteil dieser Erfindung liegt in der gegenüber bisherigen Motoren kleineren Dimensionierung, da bürstenlose Gleichstrommotoren ein hohes Drehmoment schon bei niedrigen Drehzahlen aufweisen. Hiermit werden Leistungsaufnahme, die Wärme- und Vibrationsentwicklung reduziert. Die Pumpe kann wesentlich kompakter gebaut werden. Die zur Ansteuerung der Spulen notwendige Elektronik kann zudem so ausgestaltet werden, dass eine Drehzahlsteuerung und damit eine Regelung des Saugvermögens möglich ist.

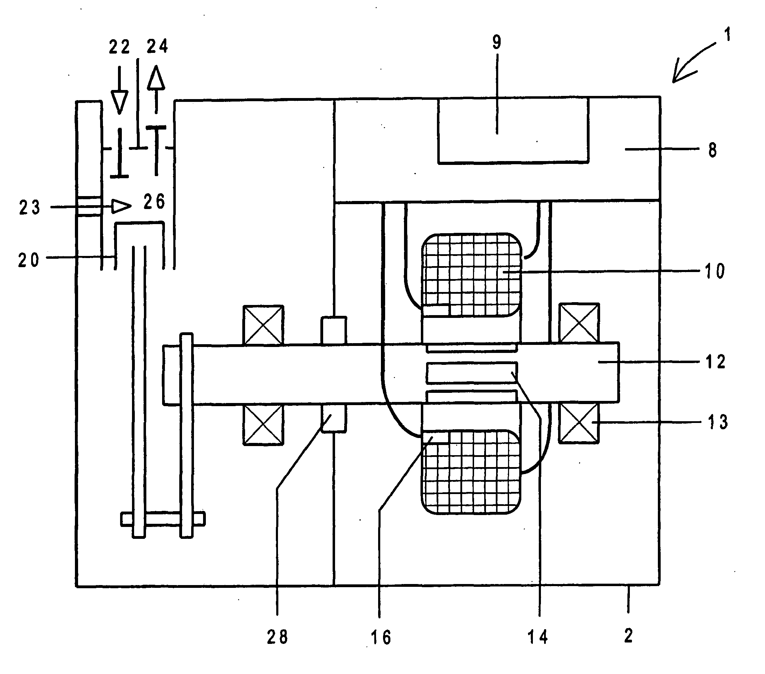

Die vorliegende Erfindung soll anhand der einzigen Figur näher erläutert werden. Diese Figur zeigt eine erfindungsgemäße einstufige Kolbenvakuumpumpe 1 mit einem Gehäuse 2. Eine Welle 12 ist in Lagern 13 rotierbar gelagert. Auf der Welle sind Permanentmagnete 14 angebracht, Spulen 10 erzeugen ein drehendes Magnetfeld. Diese Drehung wird durch elektronische Kommutierung erzeugt. Zur Erzeugung der Kommutierungssignale dient eine Regelelektronik 8 mit einem Leistungsteil 9 zur Ansteuerung der Spulen. Positionssensoren 16 ermöglichen es der Regelelektronik, die Lage des Rotors zu bestimmen. Diese Sensoren können beispielsweise als Hall-Sensoren ausgebildet sein. Die Regelelektronik sitzt in einem abnehmbaren Gehäuseteil und beinhaltet Steuerteil und Leistungsteil, so dass die Pumpe über ein Kabel mit einem Spannungsversorgungsnetz verbunden werden kann. Hierbei kann es sich beispielsweise um ein Industriespannungsnetz (24 V oder 48 V), ein 230 V Wechselspannungsnetz oder ein anderes übliches Versorgungsnetz handeln. Über einen Kurbeltrieb bewegt diese Welle den Kolben 20 und verändert damit periodisch das Volumen des Schöpfraumes 26. Im Kopf des Zylinders sitzen Gaseinlass 22 und Gasauslass 24, die jeweils mit Ventilen versehen sind. In einem unteren Abschnitt des Zylinders sitzt ein weiterer Gaseinlass 23, der kolbengesteuert ist. Nur wenn der Kolben am unteren Umkehrpunkt angelangt ist, wird dieser Gaseinlass freigegeben.

In einer vorteilhaften Ausführung ist die Regelelektronik so ausgebildet, dass die Kolbenvakuumpumpe mit verschiedenen Drehzahlen betrieben werden kann.

In einer weiteren Ausführung ist die Kolbenvakuumpumpe als mehrstufige Kolbenvakuumpumpe ausgeführt.

In einer vorteilhaften Ausführung ist die Regelelektronik so ausgestaltet, dass sie an ein- oder mehrphasigen Netzspannungen zwischen 60 V und 400 V betrieben werden kann. Ein Wahlschalter erlaubt die Einstellung auf die jeweilige Versorgungsspannung. Noch vorteilhafter ist es, wenn die Regelelektronik Mittel enthält, mit denen sie selbsttätig die angelegte Versorgungsspannung erkennen kann. Diese Maßnahmen führen dazu, dass die trocken laufende Kolbenvakuumpumpe an allen Weltspannungsnetzen betrieben werden kann, wodurch erheblich Kosten gespart werden können, da die Pumpen nicht mehr auf spezielle örtliche Gegebenheiten angepasst werden müssen. Stattdessen können für alle Pumpen die gleichen Standardbauteile verwendet werden.

Die Regelelektronik 8 enthält einen Leistungsteil 9 zur Ansteuerung der Spulen. Vorteilhaft ist es, wenn dieser Leistungsteil in thermischen Kontakt mit der Gehäusewandung gebracht wird. Über das Gehäuse wird dann in thermischer Konvektion die Wärme von der Pumpe abgeführt, wodurch zusätzliche Kühlmittel vermieden werden können.

In einer weiteren Ausführung ist der Gehäuseteil, der die Regelelektronik 8 beinhaltet, Bestandteil des Pumpengehäuses 2.

## Patentansprüche

1. Trocken laufende Kolbenvakuumpumpe mit einem Gehäuse und mit mindestens einer Pumpstufe, wobei jede Pumpstufe aus einem Zylinder mit Gasauslass- und mindestens einem Gaseinlass (22, 23) und einem darin oszillierende Bewegungen ausführenden Kolben besteht, - wobei mindestens einer der Gaseinlässe (22,23) kolbengesteuert ist, einem Antriebsystem mit Kurbeltrieb und Welle (12),
**dadurch gekennzeichnet, dass**
- das Antriebssystem aus auf der Welle angebrachten Permanentmagneten (14) und ortsfesten elektrischen Spulen (10) besteht, die ein magnetisches Drehfeld erzeugen,
- und die zur Ansteuerung der Spulen notwendige Regelelektronik (8) im Pumpengehäuse (2) integriert ist; und wobei
mindestens der Leistungsteil (9) der Regelelektronik (8) mit der Gehäusewandung in thermischem Kontakt steht, so dass über dass Gehäuse in thermischer Konvektion Wärme von der Pumpe abgeführt wird.

2. Trocken laufende Kolbenvakuumpumpe nach Anspruch 1, **dadurch gekennzeichnet, dass** Sensoren (16) zur Bestimmung der Rotorlage vorhanden sind.

3. Trocken laufende Kolbenvakuumpumpc nach Anspruch 2, **dadurch gekennzeichnet, dass** die Sensoren (16) zur Bestimmung der Rotorlage Hall-Sensoren sind.

4. Trocken laufende Kolbenvakuumpumpe nach einem der vorhergehenden Ansprüche, **dadurch gekennzeichnet, dass** die Regelelektronik (8) so ausgebildet ist, dass sie zur Energieversorgung direkt mit einem Spannungsnetz verbunden ist.

5. Trocken laufende Kolbenvakuumpumpe nach einem der vorhergehenden Ansprüche, **dadurch gekennzeichnet, dass** die Regelelektronik (8) mit ein- oder mehrphasigen Spannungen zwischen 60 V und 400 V betrieben werden kann.

6. Trocken laufende Kolbenvakuumpumpe nach einem der vorhergehenden Ansprüche, **dadurch gekennzeichnet, dass** die Regelelektronik (8) Mittel zur Erkennung der Netzspannung und zur Umschaltung des Spannungsbereiches enthält.

## Claims

1. Dry-running piston-type vacuum pump with a casing and with at least one pumping stage, wherein each pumping stage consists of a cylinder with a gas outlet and at least one gas inlet (22, 23) and a piston executing oscillating movements therein, wherein at least one of the gas inlets (22, 23) is piston-controlled, a drive system with a crank drive and a shaft (12),
**characterised in that**
- the drive system consists of permanent magnets (14) which are mounted on the shaft and stationary electrical coils (10) which generate a rotating magnetic field,
- and the control electronics (8) which are required to control the coils are integrated in the pump casing (2); and wherein
at least the power section (9) of the control electronics (8) is in thermal contact with the casing wall, so that heat is removed from the pump by way of the casing in thermal convection.

2. Dry-running piston-type vacuum pump according to Claim 1, **characterised in that** sensors (16) are provided for determining the rotor position.

3. Dry-running piston-type vacuum pump according to Claim 2, **characterised in that** the sensors (16) for determining the rotor position are Hall sensors.

4. Dry-running piston-type vacuum pump according to any one of the preceding Claims, **characterised in that** the control electronics (8) are formed so that they are directly connected to a voltage mains supply in order to supply power.

5. Dry-running piston-type vacuum pump according to any one of the preceding Claims, **characterised in that** the control electronics (8) can be operated with single- or multi-phase voltages between 60 V and 400 V.

6. Dry-running piston-type vacuum pump according to any one of the preceding Claims, **characterised in that** the control electronics (8) comprise means for detecting the mains voltage and for changing over the voltage range.

## Revendications

1. Pompe à vide à pistons sans lubrifiant comprenant
- un corps de pompe (2),
- au moins un étage de pompe, chaque étage étant constitué d'un cylindre comportant une ouverture de sortie des gaz (24) et au moins une ouverture d'admission des gaz (22, 23) ainsi que d'un piston effectuant des mouvements de va-et-vient à l'intérieur du cylindre, l'une au moins des ouvertures d'admission des gaz (22, 23) étant commandée par le piston,
- et un système d'entraînement comportant une transmission à manivelle et un arbre (12),
**caractérisée en ce que** le système d'entraînement est composé d'aimants permanents (14) montés sur l'arbre et de bobines électriques (10) fixes produisant un champ magnétique rotatif, et **en ce que** le système électronique de régulation (8) nécessaire à l'excitation des bobines est intégré dans le corps de pompe (2), au moins l'organe de puissance (9) du système électronique de régulation (8) étant en contact thermique avec la paroi du corps de pompe, de sorte que, par le biais du corps de pompe, il y a dissipation de la chaleur provenant de la pompe, sous forme de convection thermique.

2. Pompe à vide à pistons sans lubrifiant selon la revendication 1, **caractérisée en ce que** des capteurs (16) sont présents pour détecter la position du rotor.

3. Pompe à vide à pistons sans lubrifiant selon la revendication 2, **caractérisée en ce que** les capteurs (16) de détection de la position du rotor sont des capteurs de type à effet Hall.

4. Pompe à vide à pistons sans lubrifiant selon l'une quelconque des revendications précédentes, **caractérisée en ce que** le système électronique de régulation (8) est configuré de sorte telle que pour son alimentation en énergie, il est relié directement à un réseau électrique.

5. Pompe à vide à pistons sans lubrifiant selon l'une quelconque des revendications précédentes, **caractérisée en ce que** le système électronique de régulation (8) peut fonctionner avec des tensions monophasées ou polyphasées comprises entre 60 V et 400 V.

6. Pompe à vide à pistons sans lubrifiant selon l'une quelconque des revendications précédentes, **caractérisée en ce que** le système électronique de régulation (8) comprend des moyens de reconnaissance de la tension de réseau et de commutation entre les gammes de tensions.
